# EUROPEAN PATENT SPECIFICATION

(11) **EP 2 043 429 B1**
(45) Date of publication and mention of the grant of the patent: **16.10.2013**
(21) Application number: 07747525.9
(22) Date of filing: 22.06.2007
(51) Int. Cl.: A01K 73/04

(54) **FISHING EQUIPMENT**
ANGELAUSRÜSTUNG
MATÉRIEL DE PÊCHE

(30) Priority: 22.06.2006 NL 1032044
(43) Date of publication of application: 08.04.2009
(73) Proprietor: H. F. K. Holding B.V., 3741 LM Baarn (NL)
(72) Inventor: KLEIN WOOLTHUIS, Harmen, NL-3741 LM Baarn (NL)
(74) Representative: Plaggenborg, Menko Bernard
(86) International application number: PCT/NL2007/050302
(87) International publication number: WO 2007/148974

(56) References cited:
- FR-A- 1 260 626
- NL-C1- 1 030 878
- US-A- 2 729 910

## Description

The present invention relates to a method for fishing according to the preamble of claim 1 and to a fishing equipment according to the preamble of claim 3.

The use of such fishing equipment is generally known in the art of fishing, for example NL1030878. Such fishing equipment is usually towed along by a ship. Substantially such fishing equipment is embodied as a cross beam whose ends are provided with means for coupling to a towing cable that is towed along by the ship. Fishing equipment of this kind will therefore be moved in a direction substantially perpendicular to the longitudinal direction of the cross beam. It comprises a net trawling behind. The fishing equipment and the net are towed along over the seabed.

Hereinafter reference will mainly be made to such fishing equipment in the form of a beam trawl. However, the invention is in no way limited to just a beam trawl. Other fishing equipment that is moved through, over or above the floor of the sea or the like, all fall within the scope of the present invention. Any device for catching live organisms in, on or above the floor of a sea or the like is included in the term fishing equipment used herein.

At the front side of the cross beam, that is to say in front of the net, a prior art beam trawl comprises means for disturbing the bottom of the sea or the like. These may consist of, for example, heavy chains that are dragged over and through the seabed. This will startle flatfish and other organisms living in, on and above the floor and they can subsequently be caught in the net.

Because of the great weight of a beam trawl, approximately 7000 kg at a width of approximately 10 meter, this fishing technique destroys the structure of the seabed.

Another drawback of this fishing technique is that the friction is very considerable, with the result that energy costs are also very high.

The fact that the entire fishing equipment is trawled along the seabed creates the further drawback that obstacles on the seabed come in contact with the fishing equipment, making them both liable to being destroyed.

It is the object of the invention to provide an improved fishing equipment.

It is also an object of the invention to provide a fishing equipment wherein at least one of the above mentioned drawbacks is absent.

It is a particular object of the invention to provide a fishing equipment that causes only little or substantially no damage to the seabed.

It is an additional object of the invention to provide fishing equipment that substantially does not touch the seabed.

At least one the above mentioned objectives is achieved by means of a method according to claim 1 and a fishing equipment encompassing the measures described in claim 3.

The advantage of the method and this fishing equipment according to the invention is that the fishing equipment is automatically trawled at a predetermined elevation above the seabed, while the elevation is determined by the at least one feeler extending towards the seabed. When the feeler moves downward, for example, when the distance between the fishing equipment and the seabed increases, the orientation of the wing together with the fishing equipment according to the invention will change such that the rear side of the wing (relative to the orientation of the front side of the wing) will move upwards. This, in combination with the movement of the fishing equipment through the water, will cause the fishing equipment to move downward. Since in that case the fishing equipment comes closer to the seabed, the tip of the feeler will through its contact with the seabed be moved upwards, as a consequence of which the orientation of the wing will be changed such that the downward movement is reduced or completely cancelled, thereby stopping the fishing equipment from moving further in a downward direction.

When the fishing equipment becomes positioned closer to the seabed, the tip of the feeler will be moved upward. In accordance with the invention, the rear side of the wing will make a relative downward movement. This will cause the fishing equipment to float upward, so as to increase the distance between the fishing equipment and the seabed. This automatically ensures that the fishing equipment itself is unable to touch the seabed.

It is therefore especially preferred that the rear side of the wing:
moves upward when the feeler moves downward; and
moves downward when the feeler moves upward.

In an inversely proportional manner it is possible to elect to have the orientation of the front side of the wing changing, which is an equivalent embodiment.

In accordance with the invention it is possible that the at least one feeler is able to extend both forward and rearward. In both cases, the feeler has to be coupled to the wing in such a manner that the angle position of the wing undergoes the appropriate changes when the feeler moves up and down, as mentioned above. A person skilled in the art is quite capable of determining which movement of the feeler(s) will suitably change the orientation of the wing(s).

According to a first preferred embodiment, the feeler(s) extend(s) from the wing(s) forward. This affords the advantage that the feelers will signal an obstacle or other cause of deviation in height on the floor before the actual fishing equipment has reached the obstacle. In this way the change of direction can be set in train before the obstacle is reached, so that a collision between the fishing equipment and the obstacle is avoided at all times. If, on the other hand, the floor shelves, this embodiment affords the advantage that the fishing equipment immediately follows the decline of the floor so that the distance between the fishing equipment and the floor does not become too large, which would have an adverse effect on the resistance.

According to another embodiment, it is preferred for the feelers to extend rearward from the wings. In that case the feelers could be of a relatively simple design. Possible collisions with obstacles on the floor will only exert minor forces on the feelers.

In order to be able to cause the fauna on the seabed to swim up, the fishing equipment according to the invention comprises in front of a lead side of the net a device for stirring up the fauna on the seabed. It is in particular preferred for this device to emit electrical pulses. In that case a direct, physical contact between this device and the seabed is not necessary. The emission of electrical pulses will startle flatfish and other fauna on the seabed. This will cause them to swim up and to be caught in the net trawling behind the fishing equipment.

To keep the net open, it is fastened to the ends of the fishing equipment by means of, for example, side plates that are provided at the ends. The distance between the side plates is maintained by the cross beam. The wings may be embodied such that the cross beam is in fact integrally comprised therein. The wings may be coupled with the respective adjoining side plates by means of rotational axes.

During trawling, the net will be kept open at the front as mentioned above. The top side of the opening will then be positioned slightly in front of the lower side of the opening. The most forward position is here referred to as the lead side of the net.

It order to ensure that the fishing equipment is at all times moved towards the seabed when trawling behind a ship, it is preferred for the same to comprise means for moving the rear side of the wings upwards in case the feeler does not touch the seabed. These means may consist of, for example, buoyancy means that ensure that the rear side of the wing has increased buoyancy relative to the portions of the wing that, in the direction of movement, are located more forward. An equivalent embodiment comprises such a wing which is made heavier at the front side than at the rear part of the wing.

Another variant is embodied in that means are provided, for example a spring preloading at least one of the wing and the feeler, such that the rear side of the wing is forced upward when the free tip of the feeler is not touching the seabed.

When trawling fishing equipment such as a beam trawl, it will automatically move towards the seabed until the feeler touches the seabed. As from that moment, the position of the feeler will determine the fishing equipment's position with respect to height.

Further advantages and features of the invention will be clarified in the following description of a preferred embodiment, which is given merely as example and is not to be considered as limitation of the invention, and from the description of the appended drawings.

Fig. 1 shows a schematic view of a portion of a fishing equipment according to the invention.

Fig. 2 shows a schematic view of a wing of the fishing equipment according to the invention.

Fig. 3 shows a schematic illustration of the working principle of the fishing equipment according to the invention.

Fig. 4 shows a schematic illustration of another embodiment of the fishing equipment according to the invention.

The following description of an exemplary embodiment of fishing equipment according to the invention is not to be understood as limitation of the invention. Although in the main reference will be made to a beam trawl, the invention relates to any fishing equipment that can be trawled through, over or above a floor of a sea or the like. The specific reference to a beam trawl is only of an illustrative nature. Similar components in the various figures are indicated with identical reference numerals. Only the components that are essential with regard to understanding the invention are described.

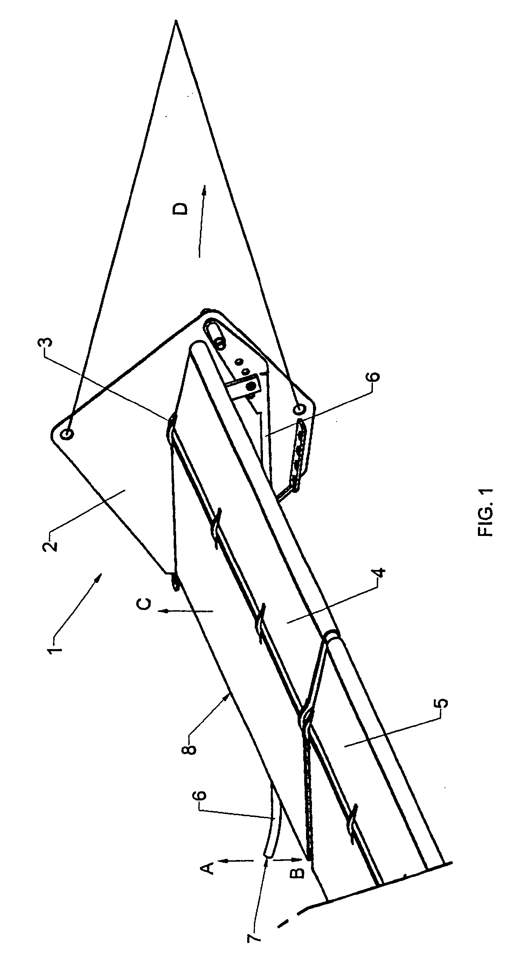

Fig. 1 schematically shows a perspective view of a portion of a fishing equipment according to the invention. The beam trawl 1 comprises two side plates 2, only one is shown, to which a cross beam 3 is fastened. The cross beam 3 extends between the two side plates 2. The cross beam 3 also acts as pivot for the wings 4, 5. In the embodiment shown, two wings 4, 5 are provided. It is, however, also possible to use only one wing or more than two wings. However, each wing 4, 5 must be coupled with an individual feeler 6, as will be described below.

In accordance with a first embodiment, the main body may be envisaged as the combination of the cross beam 3 and the at least one wing, optionally in combination with the side plates. In accordance with another embodiment, the main body may be envisaged as only the cross beam, or as the cross beam with the side plates, or as the cross beam with the wings. Moreover, when the at least one wing is integrated with the cross beam, the at least one wing may, in the sense of this invention, be envisaged as the main body.

Each wing 4, 5 may be provided with a feeler 6. In the Figure only one feeler, which is coupled with the wing 4, is visible.

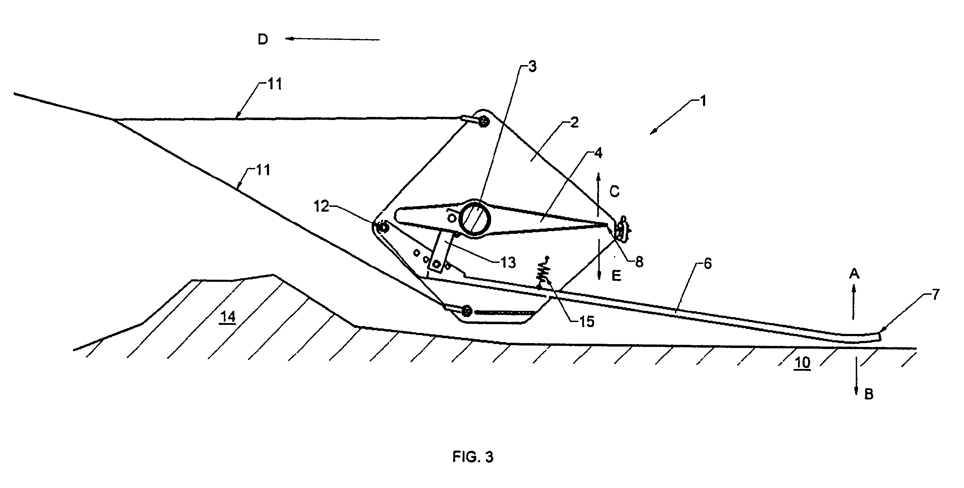

The feeler 6 is able to pivot around a pivot (not shown in Fig. 1, but explained in more detail in Fig. 3) allowing the tip 7 of the feeler 6 to move upward A and downward B. The downward movement B of the tip 7 of the feeler 6 will ensure that the end 8 of the wing 4 moves upward C. Likewise, an upward movement A of the tip 7 of the feeler 6 will result in the downward movement of the rear end 8 of the wing 4.

The side plate 2 is provided with means for moving the beam trawl in the direction D. This movement occurs by means of a ship.

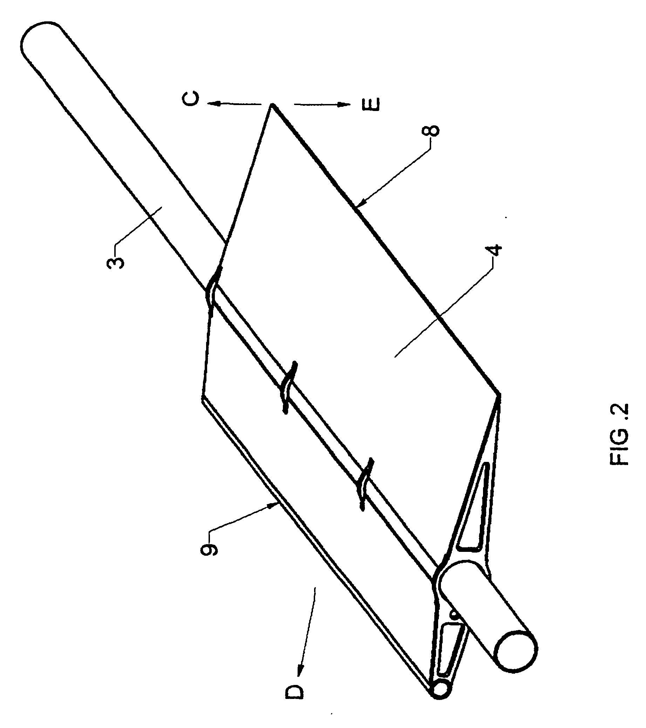

Fig. 2 shows a detail of the wing according to Fig. 1, which must be understood as being a schematic illustration. The wing 4 is pulled in the direction D. In cross section, the wing 4 resembles a wing of an aircraft. At the front side 9 it is rounded off, the rear edge 8 is relatively sharp.

The wing 4 is rotatable around the axis 3, allowing the rear side 8 of the wing to move upward C and downward E.

Fig. 3 shows a schematic illustration of the working principle of the movement of the wing 4. The tip 7 of the feeler 6 touches a seabed 10. The beam trawl, of which the side plate 2, the wing 4 and the feeler 6 coupled to the wing are shown, is moved in the direction D. This occurs by means of trawling means 11, which are coupled to the side plate 2 and are also connected to the ship (not shown). The feeler 6 is coupled to the side plate by means of a pivot 12. It is also coupled to the wing 4 by means of a transmission rod 13. The transmission rod 13 is fastened to the wing and to the feeler 6 by means of a hinging coupling. The wing 4 is coupled to the side plate by means of a pivot 3. The wing 4 is freely rotatable around this pivot 3. The orientation of the wing 4 is controlled by the orientation of the feeler 6.

In the position shown in Fig. 3, the orientation of the wing 4 is substantially horizontal. This means that the beam trawl will be towed over the seabed 10 at a constant height. When the feeler 6 touches the rise 14 on the seabed 10, the feeler 6 will be moved upward A. The feeler 6 will pivot around the pivot 12. This will cause the transmission rod to be moved upward. As a result, the rear side 8 of the wing 4 will move downward E. Interaction with the seawater will cause the beam trawl 1 to move upward.

When the rise 14 on the seabed 10 has been passed, the feeler 6 will be moved downward. This occurs because of a preload in the fishing equipment 1 on the feeler 6. This preload may consist of a spring 15 pushing the feeler 6 downward in relation to the fastening point of the spring 15 to the side plate 2.

According to a variant, it is possible to realise the preload by providing the wing with increased buoyancy between the pivot 3 and the rear side 8, or to provide more weight at the front side of the pivot 3. This will cause the wing 4, when the feeler 6 does not touch the seabed, to be moved upward C at the rear side, which automatically directs the beam trawl 1 towards the seabed.

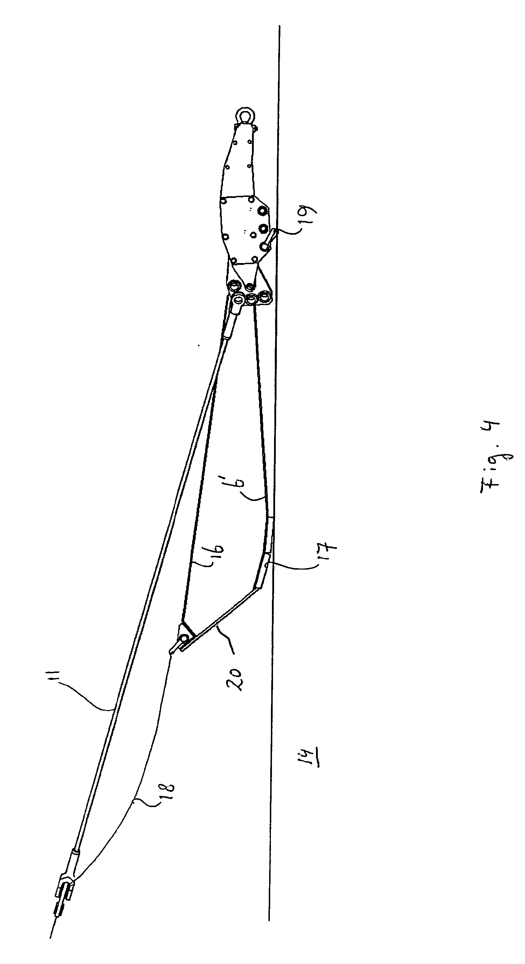

One variant of the embodiment shown in Fig. 3 is depicted in Fig. 4. The feeler 6' is here extended in the forward direction. This affords the advantage that unevennesses in front of the fishing equipment are already signalled before the fishing equipment reaches them, so that the contour of the floor can generally be followed sooner than when the feeler is extended rearwards. The feeler 6' is provided with means that facilitate guiding the feeler 6' over the seabed 14. In this embodiment, the fishing equipment is provided with a towing means 11 connected to a mounting plate, which in the embodiment shown is located in the centre of the main body. Such connecting system must not be understood as limitation with respect to the protective scope.

The tip of the feeler 6' is provided with a portion 20 pointing slightly upward, to facilitate guiding the feeler over the seabed. As a precaution, a cable 18 is provided which, during normal use, hangs free at all times and is connected with the towing means and which cable secures the feeler 6' in the event of it being caught behind an obstacle. Also provided is a guide 19 that may be connected to the main body of the fishing equipment, or to a side plate thereof.

A person skilled in the art is certainly capable of applying the working principle described with reference to Figs. 1-3 to the embodiment of Fig. 4.

The drawing does not show the means for stirring up the fauna on the seabed. These may be comprised, for example, of elements projecting from the beam trawl 1 in the direction D, emitting electrical pulses. These electrical pulses will startle for example flatfish, causing them to swim up. They will subsequently be caught in a net trawling behind the beam trawl. For the simplification of the drawing this is not shown. A net of this kind is, however, generally known in the art.

## Claims

1. A method for fishing, comprising the steps of towing a fishing equipment (1) comprising a main body (3; 4; 5) and a net by means of towing means (11) in a forward direction (D) along a seabed (10), **characterised in that** the fishing equipment comprises at least one wing (4; 5), wherein the orientation of the wing in relation to the seabed (10) is controlled by at least one feeler (6; 6') extending from the at least one wing (4; 5) towards the seabed (10), a first end of the feeler (6; 6') being coupled with the at least one wing (4; 5), and the other end (7), during use, freely extending towards the seabed (10), such that a change of the position of the free end (7) of the feeler (6; 6') changes a position of the wing (4) with respect to the seabed (10).

2. Fishing equipment (1) for use in a method according to claim 1, comprising: a main body; towing means (11) for moving the fishing equipment (1) perpendicular to a longitudinal direction of the main body and in a forward direction (D) along a seabed (10); and a net, **characterised in that** the fishing equipment (1) comprises at least one wing (4; 5), whose orientation in relation to the seabed (10) is controlled by at least one feeler (6; 6') extending from the at least one wing (4; 5) towards the seabed (10), a first end of the feeler (6; 6') being coupled with the at least one wing (4; 5), and the other end (7), during use, freely extending towards the seabed (10).

3. Fishing equipment (1) according to claim 2, **characterised in that** the at least one feeler (6; 6') extends from the wing (4; 5) forward.

4. Fishing equipment (1) according to claim 2, **characterised in that** the feeler (6; 6') extends rearward from the wing (4; 5).

5. Fishing equipment (1) according to claim 2 - 4, **characterised in that** the rear side (8) of the wing (4; 5):
a. moves upward when the feeler (6; 6') moves downward; and
b. moves downward when the feeler (6; 6') moves upward.

6. Fishing equipment (1) according to one of the claims 2 - 5, **characterised in that** a buoyancy means is provided at the rear side (8) of the wing (4; 5), causing the rear side (8) of the wing (4; 5) during use to move upwards and the feeler (6; 6'), coupled with the wing (4; 5), downwards.

7. Fishing equipment (1) according to one of the claims 2 - 6, **characterised in that** a spring (15) is provided preloading at least one of the wing (4; 5) and the feeler (6; 6'), such that the rear side (8) of the wing (4; 5) is forced upward when the free tip (7) of the feeler (6; 6') is not touching the seabed (10).

8. Fishing equipment (1) according to one of the claims 2 - 7, **characterised in that** in front of a lead side of the net a device is provided for stirring up the fauna on the seabed.

9. Fishing equipment (1) according to claim 8, **characterised in that** the device emits electrical pulses.

10. Fishing equipment (1) according to one of the claims 2 - 9, **characterised in that** the same comprises at least two separate wings (4, 5), each of which is individually coupled with at least one feeler (6; 6').

## Patentansprüche

1. Verfahren zum Fischen, welches die Schritte umfasst, Ziehen einer Fischausrüstung (1), welche einen Hauptkörper (3, 4, 5) und ein Netz umfasst, mittels einer Zieheinrichtung (11) in Vorwärtsrichtung (D) entlang des Meeresbodens (10), **dadurch gekennzeichnet, dass** die Fischausrüstung mindestens einen Flügel (4, 5) umfasst, wobei die Orientierung des Flügels in Bezug auf den Meeresboden (10) durch mindestens einen Fühler (6, 6') gesteuert wird, der sich von dem mindestens einen Flügel (4, 5) auf den Meeresboden (10) zu erstreckt, wobei ein erstes Ende des Fühlers (6, 6') mit dem mindestens einen Flügel (4, 5) gekoppelt ist, und wobei sich das andere Ende (7) während Verwendung frei auf den Meeresboden (10) zu erstreckt, so dass eine Änderung der Position des freien Endes (7) des Fühlers (6, 6') eine Position des Flügels (4) im Hinblick auf den Meeresboden (10) ändert.

2. Fischausrüstung (1) zur Verwendung in einem Verfahren nach Anspruch 1, welche umfasst, einen Hauptkörper, eine Zieheinrichtung (11) zur Bewegung der Fischausrüstung (1) senkrecht zu einer Längsachse des Hauptkörpers und in einer Vorwärtsrichtung (D) entlang des Meeresbodens (10), und ein Netz, **dadurch gekennzeichnet, dass** die Fischtausrüstung (1) mindestens einen Flügel (4, 5) umfasst, dessen Orientierung in Bezug auf den Meeresboden (10) durch mindestens einen Fühler (6, 6') gesteuert wird, der sich von dem mindestens einen Flügel (4, 5) auf den Meeresboden (10) zu erstreckt, wobei ein erstes Ende des Fühlers (6, 6') mit dem mindestens einem Flügel (4, 5) gekoppelt ist, und wobei sich das andere Ende (7) während Verwendung, frei auf den Meeresboden (10) zu erstreckt.

3. Fischausrüstung (1) nach Anspruch 2, **dadurch gekennzeichnet, dass** sich der mindestens eine Fühler (6, 6') von dem Flügel (4, 5) nach vorne erstreckt.

4. Fischausrüstung (1) nach Anspruch 2, **dadurch gekennzeichnet, dass** sich der min¬destens eine Fühler (6, 6') von dem Flügel (4, 5) nach hinten erstreckt.

5. Fischausrüstung (1) nach Anspruch 2 - 4, **dadurch gekennzeichnet, dass** sich die Rück¬seite (8) des Flügels (4, 5):
a. nach oben bewegt, wenn sich der Fühler (6, 6') nach unten bewegt; und
b. nach unten bewegt, wenn sich der Fühler (6, 6') nach oben bewegt,

6. Fischausrüstung (1) nach einem der Ansprüche 2 - 5, **dadurch gekennzeichnet, dass** an der Rückseite (8) des Flügels (4, 5) ein Auftriebsmittel vorgesehen ist, das die Rückseite (8) des Flügels (4, 5) während Verwendung nach oben und den mit dem Flügel (4, 5) ge¬koppel¬ten Fühler (6, 6') nach unten bewegt.

7. Fischausrüstung (1) nach einem der Ansprüche 2 - 6, **dadurch gekennzeichnet, dass** eine Feder (15) vorgesehen ist, mit der mindestens ein Flügel (4, 5) oder der Fühler (6, 6') vor¬gespannt ist, so dass die Rückseite (8) des Flügels (4, 5) nach oben gedrückt wird, wenn die freie Spitze (7) des Fühlers (6, 6') den Meeresboden (10) nicht berührt.

8. Fischausrüstung (1) nach einem der Ansprüche 2 - 7, **dadurch gekennzeichnet, dass** vor der der Führungsseite des Netzes eine Einrichtung bereit gestellt wird, um die Fauna des Meeresbodens aufzuwühlen.

9. Fischausrüstung (1) nach Anspruch 8, **dadurch gekennzeichnet, dass** die Einrichtung elektrische Impulse aussendet.

10. Fischausrüstung (1) nach einem der Ansprüche 2 - 9, **dadurch gekennzeichnet, dass** diese mindestens zwei getrennte Flügel (4, 5) aufweist, die jeweils einzeln mit mindestens einem Fühler (6, 6') gekoppelt sind.

## Revendications

1. Procédé pour pêcher, comprenant les étapes de remorquage d'un matériel de pêche (1) comprenant un corps principal (3 ; 4 ; 5) et un filet à l'aide de moyens de remorquage (11) dans une direction avant (D) le long d'un fond marin (10), **caractérisé par le fait que** le matériel de pêche comprend au moins une aile (4 ; 5), l'orientation de l'aile par rapport au fond marin (10) étant commandée par au moins un palpeur (6 ; 6') s'étendant à partir de la au moins une aile (4 ; 5) vers le fond marin (10), une première extrémité du palpeur (6 ; 6') étant couplée à la au moins une aile (4 ; 5), et l'autre extrémité (7), durant l'utilisation, s'étendant librement vers le fond marin (10), de telle sorte qu'un changement de la position de l'extrémité libre (7) du palpeur (6 ; 6') change une position de l'aile (4) par rapport au fond marin (10).

2. Matériel de pêche (1) destiné à être utilisé dans un procédé selon la revendication 1, comprenant : un corps principal ; des moyens de remorquage (11) pour déplacer le matériel de pêche (1) perpendiculairement à une direction longitudinale du corps principal et dans une direction avant (D) le long d'un fond marin (10) ; et un filet, **caractérisé par le fait que** le matériel de pêche (1) comprend au moins une aile (4 ; 5), dont l'orientation par rapport au fond marin (10) est commandée par au moins un palpeur (6 ; 6') s'étendant à partir de la au moins une aile (4 ; 5) vers le fond marin (10), une première extrémité du palpeur (6 ; 6') étant couplée à la au moins une aile (4 ; 5), et l'autre extrémité (7), durant l'utilisation, s'étendant librement vers le fond marin (10).

3. Matériel de pêche (1) selon la revendication 2, **caractérisé par le fait que** le au moins un palpeur (6 ; 6') s'étend à partir de l'aile (4 ; 5) vers l'avant.

4. Matériel de pêche (1) selon la revendication 2, **caractérisé par le fait que** le palpeur (6 ; 6') s'étend vers l'arrière à partir de l'aile (4 ; 5).

5. Matériel de pêche (1) selon l'une des revendications 2-4, **caractérisé par le fait que** le côté arrière (8) de l'aile (4 ; 5) :
a. se déplace vers le haut lorsque le palpeur (6 ; 6') se déplace vers le bas ; et
b. se déplace vers le bas lorsque le palpeur (6 ; 6') se déplace vers le haut.

6. Matériel de pêche (1) selon l'une des revendications 2-5, **caractérisé par le fait qu'**un moyen de flottabilité est disposé sur le côté arrière (8) de l'aile (4 ; 5), amenant le côté arrière (8) de l'aile (4 ; 5) durant l'utilisation à se déplacer vers le haut et le palpeur (6 ; 6'), couplé à l'aile (4 ; 5), vers le bas.

7. Matériel de pêche (1) selon l'une des revendications 2-6, **caractérisé par le fait qu'**un ressort (15) est disposé préchargeant au moins l'un de l'aile (4 ; 5) et du palpeur (6; 6'), de telle sorte que le côté arrière (8) de l'aile (4 ; 5) est forcé vers le haut lorsque la pointe libre (7) du palpeur (6 ; 6') ne touche pas le fond marin (10).

8. Matériel de pêche (1) selon l'une des revendications 2-7, **caractérisé par le fait que** devant un côté avant du filet, un dispositif est disposé pour remuer la faune sur le fond marin.

9. Matériel de pêche (1) selon la revendication 8, **caractérisé par le fait que** le dispositif émet des impulsions électriques.

10. Matériel de pêche (1) selon l'une des revendications 2-9, **caractérisé par le fait que** celui-ci comprend au moins deux ailes séparées (4 ; 5), dont chacune est individuellement couplée à au moins un palpeur (6 ; 6').
